Europäisches Patentamt

European Patent Office

Office européen des brevets

(11) Veröffentlichungsnummer: **0 123 991**
**B1**

(12) **EUROPÄISCHE PATENTSCHRIFT**

(45) Veröffentlichungstag der Patentschrift:
**20.11.86**

(21) Anmeldenummer: **84104222.9**

(22) Anmeldetag: **13.04.84**

(51) Int. Cl.⁴: **F 16 N 7/36,** F 01 D 25/18

(54) Selbstansaugende Zentrifugal-Schmierölpumpe eines Abgasturboladers.

(30) Priorität: **29.04.83 CH 2311/83**

(43) Veröffentlichungstag der Anmeldung:
**07.11.84 Patentblatt 84/45**

(45) Bekanntmachung des Hinweises auf die Patenterteilung:
**20.11.86 Patentblatt 86/47**

(84) Benannte Vertragsstaaten:
**CH DE FR GB LI**

(56) Entgegenhaltungen:
**CH - A - 353 586**
**CH - A - 451 714**
**DE - B - 1 034 430**
**DE - C - 836 131**
**GB - A - 1 102 937**
**US - A - 3 690 410**

(73) Patentinhaber: **BBC Aktiengesellschaft Brown, Boveri & Cie., Haselstrasse, CH-5401 Baden (CH)**

(72) Erfinder: **Hörler, Hansulrich, Dr., Lerchenberg 5, CH-8046 Zürich (CH)**

ACTORUM AG

# Beschreibung

Die Erfindung bezieht sich auf die selbstansaugende Zentrifugal-Schmierölpumpe eines Abgasturboladers gemäss Oberbegriff des Patentanspruchs 1.

Die Abgasturbolader sind meistens mit Wälzlagern versehen, die infolge der hohen Drehzahlen durch grosse Mengen eingespritzten Öls geschmiert und gekühlt werden müssen, während sie beim Anfahren und kleinen Drehzahlen völlig ohne Öl auskommen. Die eingespritzte Ölmenge soll genau bestimmt werden und etwa proportional zur Drehzahl zunehmen. Das Einspritzen des Öls in den Wälzkörperkranz des Wellenlagers soll in der Nähe des Lagerinnenringes erfolgen. Das Schmieröl wird durch eine auf der Welle des Turboladers angeordnete Zentrifugalpumpe aus dem Ölsumpf abgesaugt und durch Wellenlager gefördert. Ein Teil des Öls kann zwecks Kühlung direkt an die thermisch schwer beanspruchten Teile gespritzt werden.

Selbstansaugende Zentrifugal-Schmierölpumpen der eingangs genannten Art sind beispielsweise aus der Patentschrift CH-451 714 bekannt.

Bei dieser Lösung ist die Schmierölpumpe auf einem Ende der Turboladerwelle angebracht und deswegen nur bei aussengelagerten Turboladern verwendbar, da dieses System von einem relativ kleinen Innendurchmesser des rotierenden Ölringes in bezug auf den Lagerdurchmesser abhängig ist, welcher sich bei den innengelagerten Turboladern aus konstruktiven Gründen nicht erreichen lässt.

Die Schmierung der Wellenlager eines innengelagerten Abgasturboladers wird normalerweise mit einer externen, beispielsweisen Zahnrad- oder Kolbenpumpe durchgeführt. Eine solche Pumpe verlangt einen separaten Antrieb und viel Platz, ausserdem ist sie nicht wartungsfrei und die Ausfallraten einzelner Komponenten sind nicht vernachlässigbar.

Der Erfindung liegt deshalb die Aufgabe zugrunde, eine hochwirksame zuverlässige Schmierölpumpe zu schaffen, die auch für innengelagerte Abgasturbolader verwendet werden kann.

Erfindungsgemäss wird diese Aufgabe mit den kennzeichnenden Merkmalen des Patentanspruchs 1 gelöst.

Die durch die Erfindung erreichten Vorteile sind im wesentlichen darin zu sehen, dass sich bei einer für innengelagerte Abgasturbolader vorgesehenen Zentrifugal-Schmierölpumpe ein ausreichender Einspritzdruck erreichen lässt, auch wenn keine konstruktive Möglichkeit besteht, den Öldruck, der sich in einem mit der Welle rotierenden Ölring infolge der Fliehkraftwirkung bildet, für die Einspritzung in die Wellenlager direkt zu benutzen.

Mit der Anordnung einer Zentrifugal-Schmierölpumpe unmittelbar auf der Welle eines innengelagerten Abgasturboladers sind die Faktoren eliminiert, die die Verfügbarkeit des Turboladers negativ beeinflussen können.

In der Zeichnung ist ein Ausführungsbeispiel des Erfindungsgegenstandes vereinfacht dargestellt.

Es zeigen:

Fig. 1 eine selbstansaugende Zentrifugal-Schmierölpumpe eines innengelagerten Abgasturboladers im Längsschnitt;

Fig. 2 einen Radialschnitt nach Linie A-A in Fig. 1.

Gleiche Teile sind in den Figuren mit denselben Bezugszeichen versehen. Die Strömungsrichtung des Schmieröls ist mit Pfeilen bezeichnet. Erfindungsunwesentliche Teile des Abgasturboladers wie beispielsweise Turbine, Verdichter usw. sind weggelassen.

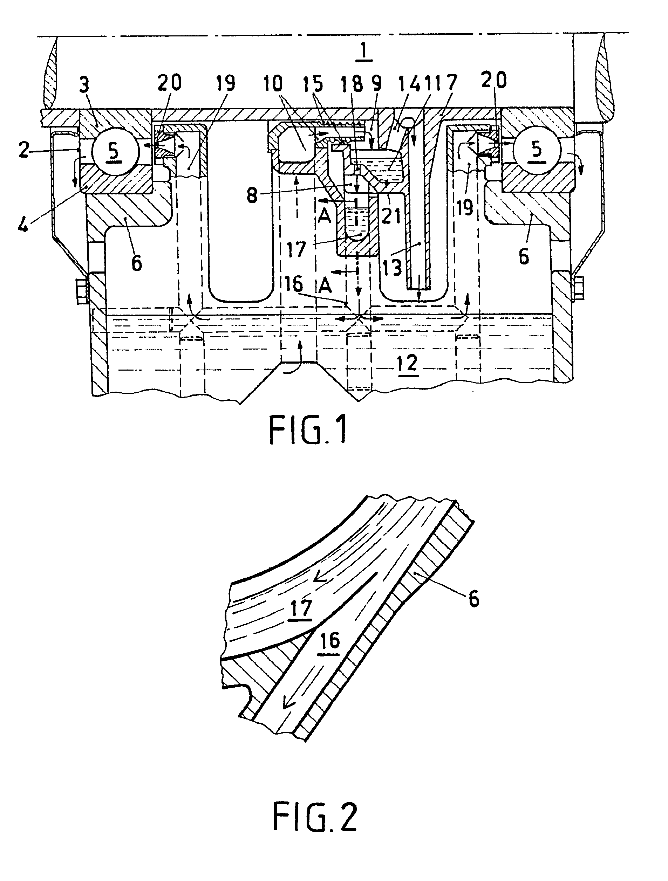

Bei der in Fig. 1 dargestellten Schmierölpumpe ist die Turboladerwelle 1 mittels Wellenlager 2, bestehend aus einem Lagerinnenring 3, einem Lageraussenring 4 und Wälzkörper 5, in einem Gehäuse 6 gelagert. Auf der Turboladerwelle 1 ist ein mit radial angeordneten Entlüftungskanälen 13 versehener Pumpenrotor 7 befestigt. Eine Ölansaugleitung 10 taucht mit ihrem unteren Ende in einen Ölsumpf 12 ein. Mit dem oberen Ende ist die Ölansaugleitung 10 mit einem Hohlraum 9 verbunden, in welchem sich während des Betriebes unter der Saugwirkung der Entlüftungskanäle 13 ein Unterdruck einstellt.

Das aus dem Ölsumpf 12 angesaugte Öl bildet während des Betriebes im Hohlraum 9 unter der Fliehkraftwirkung einen rotierenden Ölring 11 aus. Der Öldruck in diesem rotierenden Ölring 11 steigt mit zunehmendem Radius nach einer Exponentialfunktion.

Ein Druckaufbau im rotierenden Ölring 11, bereits ab kleinem Radius, wäre die Voraussetzung für das Einspritzen des Öls aus dem rotierenden Ölring unmittelbar ins Lager mit kleinem Durchmesser, da das Einspritzen des Öls in den Wälzkörperkranz in der Nähe des Lagerinnenringes 3 erfolgen muss.

Bei einer für einen innengelagerten Abgasturbolader vorgesehenen Schmierölpumpe gelingt es jedoch nicht, den Innenradius des rotierenden Ölringes kleiner zu machen als den Radius, an welchem sich die Einspritzdüsen 20 befinden, was für eine wirksame Einspritzung in die Wellenlager 2 Bedingung wäre. Die Turboladerwelle 1 kann an der Stelle des Pumpenrotors 7 aus Festigkeitsgründen in der Dicke nicht verkleinert werden und der Lagerdurchmesser darf wegen den vergrösserten Fliehkräften, der Reibungsleistung und der Materialtemperatur nicht grösser gewählt werden.

Gemäss der Erfindung ist nun der Pumpenrotor 7 zwischen zwei Wellenlagern 2 auf der Turboladerwelle befestigt. Zwischen dem Pumpenrotor 7 und der stillstehenden Ölansaugleitung 10 sind Dichtspalte 15 angeordnet. Der Hohlraum 9 des Pumpenrotors 7, in welchem sich der rotierende Ölring 11 ausbildet, weist eine Tasche 21 auf, die als Schmutzabscheider wirkt. Um im Hohlraum 9 einen konstanten Druck zu erhalten, soll die durch die Dichtspalte 15 sowie durch das Öl ständig angebrachte Luft abgeführt werden. Dies erfolgt durch die Saugwirkung der Entlüftungskanäle 13.

Um zu verhindern, dass das Schmieröl durch die Entlüftungskanäle 13 des Pumpenrotors 7 austritt, wird die Luft vorerst durch Ölsperrlöcher 14 radial nach innen geleitet, wohin das Öl infolge der Fliehkraftwirkung nicht folgen kann. Diese Ölsperrlöcher 14 befinden sich radial möglichst weit innen.

Die auf dem Pumpenrotor 7 angeordneten Abspritzlöcher 18 sind so bemessen und radial nur so weit aussenliegend, dass der innere Radius des rotierenden Ölringes 11 eine kleine Überdeckung von deren inneren Mündung gewährleistet. Damit wird der Vorteil erreicht, dass mit einem minimalen Verlust an Dralleistung verhindert wird, dass die Luft durch die Abspritzlöcher 18 in den unter Unterdruck stehenden Hohlraum 9 dringt.

Für die Ölansaugleitung 10 ist es sehr wichtig, dass keine Drosselstellen entstehen, da in diesem Fall der Ölstrom ungenügend wird.

In den Entlüftungskanälen 13 des Pumpenrotors 7 wird die Luft während des Betriebes durch die Fliehkraftwirkung nach aussen gefördert, wodurch ein Unterdruck im Hohlraum 9 entsteht und das Öl aus dem Ölsumpf 12 durch die Ölansaugleitung 10 angesaugt wird. Infolge der Wandreibung bildet sich im Hohlraum 9 ein rotierender Ölring 11 aus, dessen Innenradius von Ölzuführung und Ölabspritzung durch die Abspritzlöcher 18 zu dem stillstehenden Ölringkanal 17 abhängig ist. Im rotierenden Ölring 11 baut sich unter der Fliehkraftwirkung ein Öldruck auf. Eventueller Schmutz im Öl setzt sich an der in Form einer Tasche 21 gestalteten äusseren Innenwand des Hohlraumes 9 ab und wird von Zeit zu Zeit entfernt.

Bei richtig bemessenen Abspritzlöchern 18 stellt sich ein bestimmter Unterdruck im Hohlraum 9 automatisch ein, wenn der innere Ölringdurchmesser um wenige Millimeter geringer ist als der Durchmesser, an welchem sich die Mündungen der Abspritzlöcher 18 befinden. Würde sich der Ölringdurchmesser verkleinern, so steigt der Öldruck an der Mündung in die Abspritzlöcher 18, es wird mehr Öl abgespritzt und der Ölringdurchmesser steigt wieder, und umgekehrt. So wird das Ölniveau bzw. der Innendurchmesser des rotierenden Ölringes und damit der Unterdruck im Hohlraum 9 bei einer konstanten Drehzahl konstant gehalten. Auf einem grösseren Durchmesser ausserhalb des rotierenden Ölringes 11 ist der stillstehende U-förmige Ölringkanal 17 angeordnet. Dieser ist über eine Ölabzweigungsleitung 16 und Öldruckleitungen 19 mit den seitlich an den Wellenlagern 2 angeordneten Einspritzdüsen 20 verbunden. Das Abspritzen des Öls erfolgt aus dem rotierenden Ölring 11 in den stillstehenden Ölringkanal 17, der das von den Abspritzlöchern 18 mit Drall abströmende Öl auffängt.

Damit die Öltropfen nicht zuviel Drall verlieren, sind auf dem Pumpenrotor 7 Radialrippen 8 zur Erzeugung eines Luftwirbels angebracht. Im Ölringkanal 17 bildet sich ein rotierender Ölring aus, dessen Innendurchmesser sich so einstellt, dass der Fliehkraftdruck in seinem Aussenradius gerade genügt, um das Öl durch die Öldruckleitung 16 und die Einspritzdüse 20 in die Wälzlager 2 einzuspritzen.

Um den Druck in den Einspritzdüsen 20 zu erhöhen, ist die Ölabzweigungsleitung 16 mit Vorteil tangential zu dem Ölringkanal 17 ausgeführt, wie in Fig. 2 dargestellt ist. Der mit einem solchen Ringkanal 17 erreichbare Öldruck beträgt etwa 2 bar.

**Patentansprüche**

1. Selbstansaugende Zentrifugal-Schmierölpumpe eines Abgasturboladers, im wesentlichen bestehend aus einem auf der Turboladerwelle (1) angeordneten, mit Entlüftungskanälen (13) versehenen Pumpenrotor (7), einer Ölansaugleitung (10), die mit ihrem unteren Ende in einen Ölsumpf (12) eintaucht und mit ihrem oberen Ende mit einem Hohlraum (9) verbunden ist, in welchem sich während des Betriebes unter der Fliehkraftwirkung ein rotierender Ölring (11) ausbildet, dadurch gekennzeichnet, dass der Pumpenrotor (7) zwischen zwei Wellenlagern (2) auf der Turboladerwelle (1) befestigt ist, dass auf einem grösseren Durchmesser ausserhalb des rotierenden Ölringes (11) ein stillstehender, mit dem Ölring (11) mittels Abspritzlöcher (18) in hydraulischer Verbindung stehender U-förmiger Ölringkanal (17) angeordnet ist, welcher über eine Ölabzweigungsleitung (16) und Öldruckleitungen (19) mit den seitlich an den Wellenlagern (2) angeordneten Einspritzdüsen (20) verbunden ist.

2. Selbstansaugende Zentrifugal-Schmierölpumpe nach Anspruch 1, dadurch gekennzeichnet, dass die Ölabzweigungsleitung (16) tangential zu dem Ölringkanal (17) angeordnet ist.

3. Selbstansaugende Zentrifugal-Schmierölpumpe nach Anspruch 1, dadurch gekennzeichnet, dass der Innenraum des Pumpenrotors (7), in welchem sich während des Betriebes der rotierende Ölring (11) ausbildet, eine Tasche (21) aufweist, die als Schmutzabscheider wirkt.

**Claims**

1. Self-priming centrifugal lubricating oil pump of an exhaust gas turbo-charger, consisting essentially of a pump rotor (7) provided with de-aeration ducts (13) and located on the turbo-charger shaft (1), an oil inlet pipe (10) whose lower end is immersed in an oil sump (12) and whose upper end is connected to a hollow space (9) in which a rotating annulus of oil (11) forms under the influence of centrifugal force during operation, characterised in that the pump rotor (7) is fastened on the turbo-charger shaft (1) between two shaft bearings (2), that a stationary, U-shaped annular oil channel (17), which is hydraulically connected to the annulus of oil (11) by means of exhaust jet holoes (18), is located on a larger diameter outside the rotating annulus of oil (11), which annular oil channel (17) is connected to the injection nozzles (20), located at the sides of the shaft bearings (2), via an oil branch duct (16) and oil pressure ducts (19).

2. Self-priming centrifugal lubricating oil pump according to Claim 1, characterised in that the oil branch duct (16) is located tangentially to the annular oil channel (17).

3. Self-priming centrifugal lubricating oil pump according to Claim 1, characterised in that the internal space of the pump rotor (7) in which the rotating annulus of oil (11) forms during operation, has a pocket (21) which acts as a dirt separator.

**Revendications**

1. Pompe centrifuge auto-amorçante pour l'huile de lubrification d'un turbocompresseur à gaz d'échappement, composée essentiellement d'un rotor de pompe (7) monté sur l'arbre (1) du turbocompresseur et pourvu de canaux de désaération (13), d'une canalisation (10) d'aspiration d'huile qui plonge par son extrémité inférieure dans une réserve d'huile (12) et qui est raccordée par son extrémité supérieure à une chambre (9), dans laquelle il s'établit pendant le fonctionnement un anneau d'huile (11) tournant sous l'effet de la force centrifuge, caractérisée en ce que le rotor de pompe (7) est fixé sur l'arbre (1) du turbocompresseur entre deux paliers (2) de l'arbre, en ce que, dans une portion de plus grand diamètre à l'extérieur de l'anneau d'huile (11) tournant, est disposé un canal annulaire stationnaire à huile (17) en forme de U, se trouvant en communication hydraulique avec l'anneau d'huile (11) au moyen de trous d'éjection (18), qui est relié aux injecteurs (20) disposés latéralement dans les paliers (2) de l'arbre par l'intermédiaire d'une canalisation (16) de déviation de l'huile et de canalisations (19) à pression d'huile.

2. Pompe centrifuge auto-amorçante pour l'huile de lubrification suivant la revendication 1, caractérisée en ce que la canalisation (16) de déviation de l'huile est disposée tangentiellement au canal annulaire à huile (17).

3. Pompe centrifuge auto-amorçante pour l'huile de lubrification suivant la revendication 1, caractérisée en ce que l'espace intérieur du rotor de pompe (7), dans lequel se forme l'anneau d'huile (11) tournant pendant le fonctionnement, présente une poche (21) qui sert de séparateur de crasse.

FIG.1

FIG.2